# EUROPEAN PATENT APPLICATION

(11) **EP 2 254 335 A1**
(43) Date of publication of application: **24.11.2010**
(21) Application number: 09812475.3
(22) Date of filing: 29.10.2009
(51) Int. Cl.: H04N 7/18, B60R 1/00

(54) **DRIVE ASSISTING DISPLAY DEVICE**

(30) Priority: 13.03.2009 JP 2009060467
(71) Applicant: Panasonic Corporation, Osaka 571-8501 (JP)
(72) Inventor: ICHINOSE, Tadao, Osaka-shi Osaka 540-6207 (JP)
(74) Representative: Kügele, Bernhard
(86) International application number: PCT/JP2009/005717
(87) International publication number: WO 2010/103588

(57) **Abstract**

The present invention provides a drive assist display apparatus can make the line of sight easily change between the image views, and display the image views widely with suitable balance, for the purpose of the safety confirmation of backward or forward from a vehicle, and the purpose of the awareness of the limited area around the vehicle at the termination phase of the parking operation. The reference sign 10c indicates an image view showing a wide area behind the vehicle, the reference sign 11c indicates an image view showing an image converted from the image of the area behind the vehicle as if looked down from a virtual viewpoint, and the reference sign 13 indicates an image view drawn with pictures respectively connecting from the sides except the bottom side of the image view 11c to the corresponding sides of the clipped part of the image view 10c to be appeared as continuous from each side of the image view 11c to each side of the clipped part of the image view 10c. The reference sign 12c indicates a mask picture view filling a space among the image views 10c, 11c and 13. The boundaries among the image views 10c, 11c and 13 are drawn with lines to clear themselves among the image views.

## Description

### [Technical Field]

The present invention relates to a drive assist display apparatus for performing image processing to provide a driver with an image taken backward or forward from a vehicle by a vehicle-mounted camera.

### [Background Art]

There have so far been proposed a wide variety of drive assist display apparatuses for providing a driver with an image taken by a camera mounted backward on such as a rear trunk of a vehicle. The conventional drive assist display apparatus, therefore, makes the driver see behind the vehicle without looking a mirror. The conventional drive assist display apparatus is designed to operate a variety of image display methods of, for example, correcting the image for the influence of the deformation of a lens, and converting the image as if taken from any virtual viewpoint.

The conventional drive assist display apparatus of this type is disclosed by the Patent Literature 1.

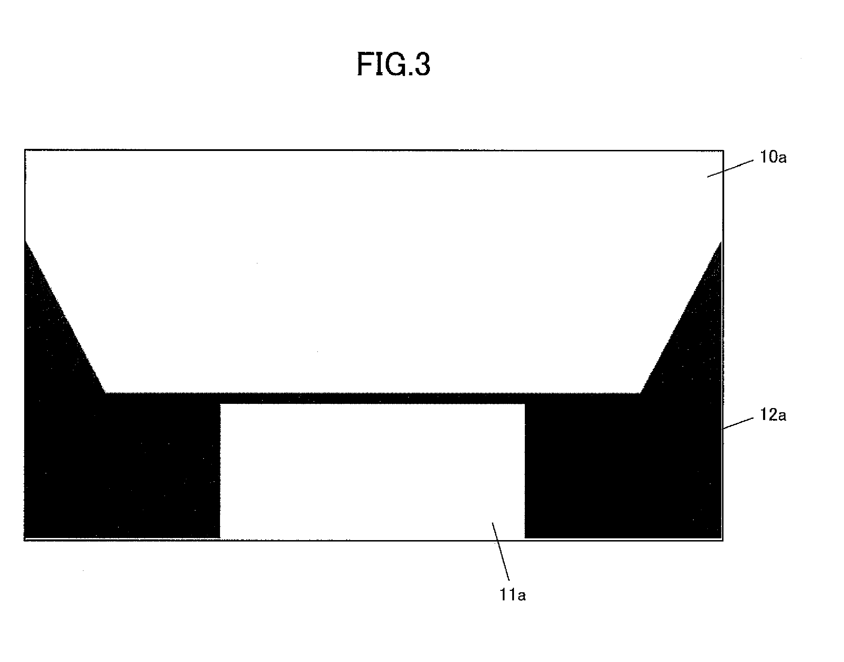

As shown in FIG. 3, the Patent Literature 1 discloses an image view 10a for a main view showing a wide area behind the vehicle, and an image view 11a for a sub view converted from the image of the area behind the vehicle as if looked down from a virtual viewpoint. The image views 10a and 11a are simultaneously displayed at the center of the whole screen in the horizontal direction. In FIG.3, the reference sign 12a indicates a mask picture view filling a space between the image views 10a and 11a without showing any taken image.

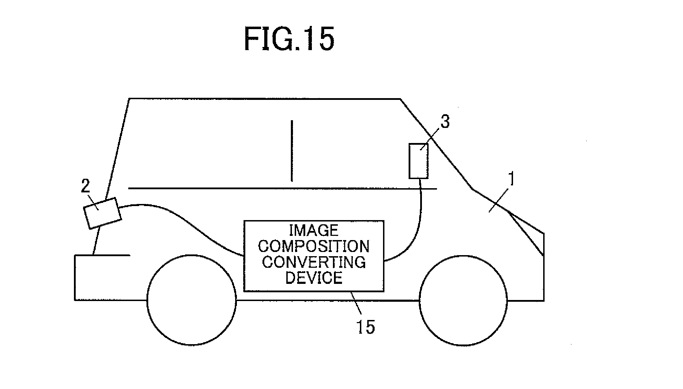

In FIG. 15, the reference sign 1 indicates the vehicle, the reference sign 2 indicates the vehicle-mounted camera for taking the image, the reference sign 15 indicates an image composition converting device for converting the image taken by the vehicle-mounted camera 2 into an composed conversion image as shown in FIG. 3, and the reference sign 3 indicates a monitor for displaying the composed conversion image converted by the image composition converting device 15.

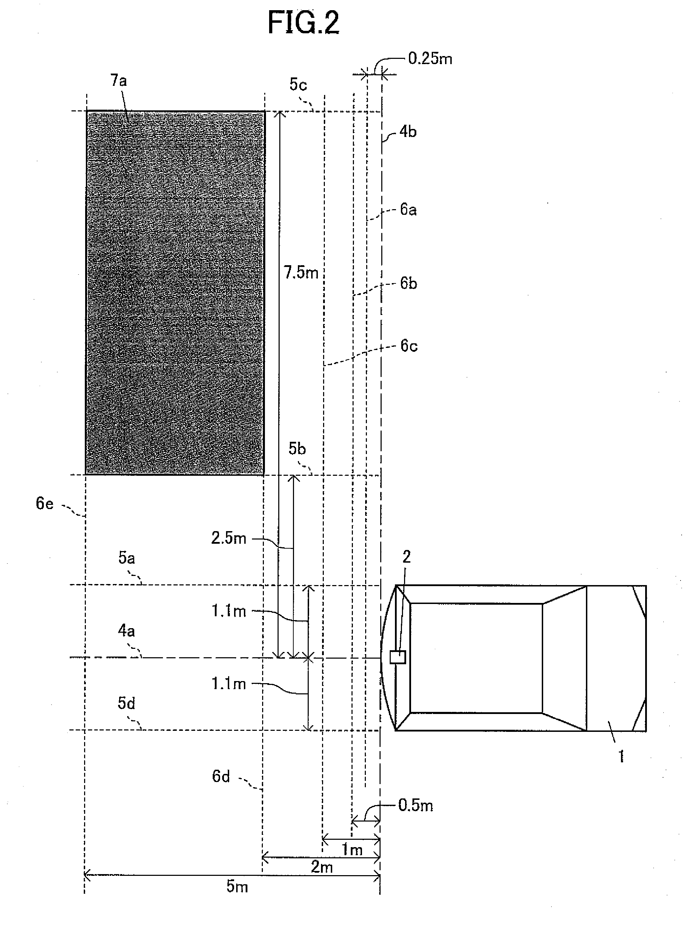

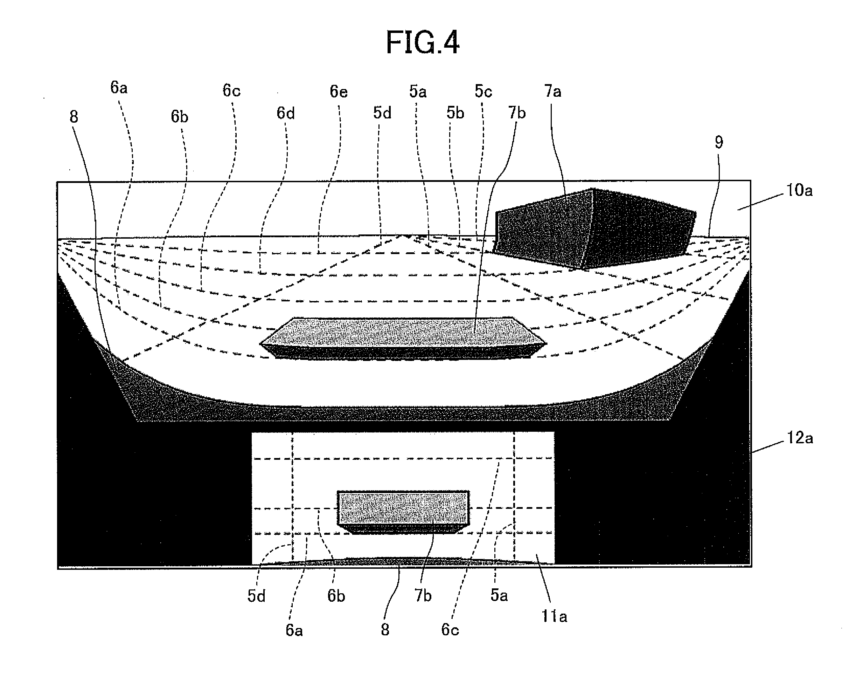

FIGS. 4 to 6 show the composed conversion images each formed as shown in FIG. 3 under the state that the imaging situation is in the positional relationship shown in FIG. 2. It is assumed that the reference sign 7a indicates a stationary cube having a height of 2m, and the reference sign 7b indicates a traveling cube having a height of 20cm, a width of 1m, and a depth of 25cm.

The monitor 3 has a landscape-oriented screen having an aspect ratio of 16:9. The composed conversion image is, therefore, defined as having an aspect ratio of 16:9 unless otherwise described hereinafter.
[Citation List]
[Patent Literature]

### [PTL1]

Patent Literature 1: Japanese Patent Laid-Open Publication 2003-104145

### [Summary of Invention]

### [Technical Problems]

The conventional drive assist display apparatus disclosed in the Patent Literature 1, however, encounters a plurality of problems as mentioned below.

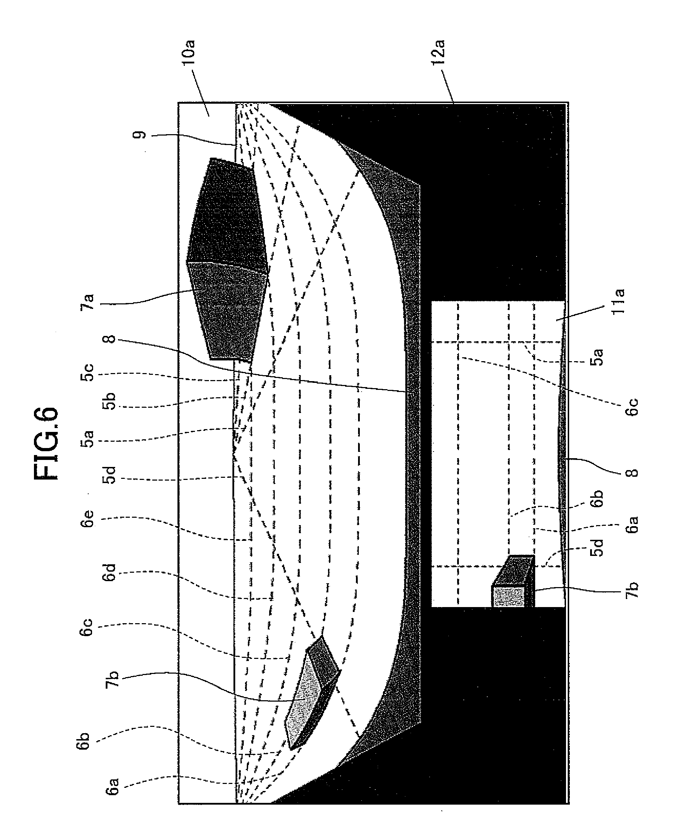

The first problem is raised by the fact that the same cube 7b is displayed on two views as shown in FIGS. 4 and 6. In other words, the same subject is displayed on two views separately placed from each other. This leads to the fact that the driver is forced to compare the two views with changing the line of sight, and to take time to match the positional relationship between two views. The conventional drive assist display apparatus, therefore, encounters such a problem that the driver is occasionally prevented from smoothly driving of the vehicle.

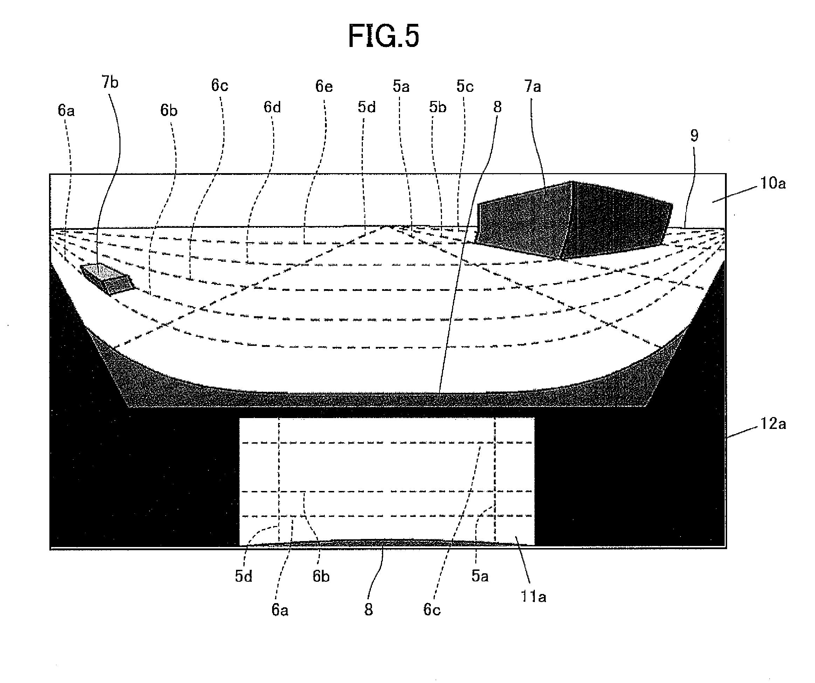

In case that the cube 7b travels sideways in order as shown in FIGS. 5, 6, and 4, the line of sight tracks the cube 7b on the image view 10a. At the time of changing the line of sight from the image view 10a to the image view 11a, the line of sight leaves from the image view 10a and re-searches the cube 7b on the image view 11a. In case that an object approaches from behind, the line of sight acts in a similar way.

The second problem is raised by the fact that the image views 10a and 11a are limited in display size in the vertical direction as shown in FIGS. 4 to 6. This results in the fact that the display range of the monitor 3 is limited and the image views 10a and 11a are needed to share the display range with each other. If the display range of the image view 10a is increased in the vertical direction, the display range of the image view 11a is needed to be decreased in the vertical direction. If the image view 11a is, in particular, required to be displayed at equal rate in the horizontal and vertical size to the subject image, the display range of the image view 11a is needed to be decreased in the horizontal direction in proportion to the vertical direction. This leads to the fact that the image view 11a is too narrow to be easily seen on the whole. On the other hand, if the display range of the image view 11a is increased in the vertical direction, the display range of the image view 10a is needed to be decreased in the vertical direction. This leads to the fact that the image view 10a is stretched in the horizontal direction. The conventional drive assist display apparatus, therefore, encounters such a problem that the relationship between the horizontal and vertical size of the image view 10a is particularly influenced when the display size has an aspect ratio of 16:9.

It is, therefore, an object of the present invention to provide a drive assist display apparatus which can remove a redundantly displayed region of the taken image, place the image views in the relationship similar to an actual view to make the line of sight easily change between the image views, and display the image views widely with suitable balance.

### [Solution to Problems]

According to one aspect of the present invention to resolve the problems, there is provided a drive assist display apparatus for displaying a composed conversion image including a first image view showing a wide area of one of rear and front of a vehicle, a second image view showing a square image converted from a part of the first image view as if looked down from a virtual viewpoint, and a mask picture view filling a space between the first and second image views, wherein the drive assist display apparatus is designed to clip a part of the first image view, and to place the second image view on a part of the clipped part of the first image view.

In accordance with the above construction, the relation ship between the imaged subjects is similar to that of an actual view without a redundantly displayed region, and the second image view can be displayed in the part of the clipped part of the first image view.

The drive assist display apparatus may be designed to draw the mask picture view with pictures respectively connecting from the up, right and left sides of the second image view to the corresponding sides of the clipped part of the first image view in different color of the up side from the right and left sides of the second image view.

In accordance with the above construction, the first and second image view can be related the positional relationship by the mask pictures representing the positional relationship between the first and second image views.

The drive assist display apparatus may be designed to draw the mask picture view with pictures respectively connecting from the sides except the bottom side of the second image view to the corresponding sides of the clipped part of the first image view to be appeared as continuous from each side of the second image view to each side of the clipped part of the first image view.

In accordance with the above construction, the subject can be continuously displayed on the first and second image views.

### [Advantageous Effects of Invention]

As mentioned above, in accordance with the drive assist display apparatus of the present invention, the image views has a high level of visibility, resulting from the fact that the positional relationship between the image views is similar to that of the actual view. Moreover, the driver is freed from comparing the two image views, resulting from the fact that the redundantly displayed region is removed from the image views. This leads to the fact that the drive assist display apparatus of the present invention can reduce the time for the driver to match the positional relationship between two image views. Furthermore, the drive assist display apparatus of the present invention can widely display the first and second image views without the influence of the horizontal and vertical size of the other image view, resulting from the fact that the second view is placed on the clipped part of the first image view. In addition, the drive assist display apparatus of the present invention can make the line of sight easily change between the first and second image views, resulting from the fact that the first and second views are related the position by the mask picture representing the positional relationship between the first and second image view.

Additionally, in accordance with the drive assist display apparatus of the present invention, the subject can be continuously displayed on the first and second image views. This leads to the fact that the drive assist display apparatus of the present invention can make the line of sight easily change between the image views.

### [Brief Description of Drawings]

[FIG. 1] FIG. 1 is a configuration diagram showing a construction of a drive assist display apparatus according to a first or second embodiment of the present invention.
[FIG. 2] FIG. 2 is a conceptual diagram showing a positional relationship of an example of an imaging situation.
[FIG. 3] FIG. 3 is a conceptual diagram showing a conventional composed conversion image.
[FIG. 4] FIG. 4 is a conceptual diagram showing a conventional composed conversion image under a first imaging situation.
[FIG. 5] FIG. 5 is a conceptual diagram showing a conventional composed conversion image under a second imaging situation.
[FIG. 6] FIG. 6 is a conceptual diagram showing a conventional composed conversion image under a third imaging situation.
[FIG. 7] FIG. 7 is a conceptual diagram showing a composed conversion image according to the first embodiment of the present invention.
[FIG. 8] FIG. 8 is a conceptual diagram showing a composed conversion image according to the first embodiment of the present invention under a first imaging situation.
[FIG. 9] FIG. 9 is a conceptual diagram showing a composed conversion image according to the first embodiment of the present invention under a second imaging situation.
[FIG. 10] FIG. 10 is a conceptual diagram showing a composed conversion image according to the first embodiment of the present invention under a third imaging situation.
[FIG. 11] FIG. 11 is a conceptual diagram showing a composed conversion image according to the second embodiment of the present invention.
[FIG. 12] FIG. 12 is a conceptual diagram showing a composed conversion image according to the second embodiment of the present invention under a first imaging situation.
[FIG. 13] FIG. 13 is a conceptual diagram showing a composed conversion image according to the second embodiment of the present invention under a second imaging situation.
[FIG. 14] FIG. 14 is a conceptual diagram showing a composed conversion image according to the second embodiment of the present invention under a third imaging situation.
[FIG. 15] FIG. 15 is a configuration diagram showing a construction of a drive assist display apparatus according to a first or second embodiment of present invention, or a conventional drive assist display apparatus.
[FIG. 16] FIG. 16 is a configuration diagram showing a construction of a drive assist display apparatus according to a first or second embodiment of present invention.

### [Description of Embodiments]

The embodiments of the present invention will be described hereinafter with reference to the drawings.

### (First Embodiment)

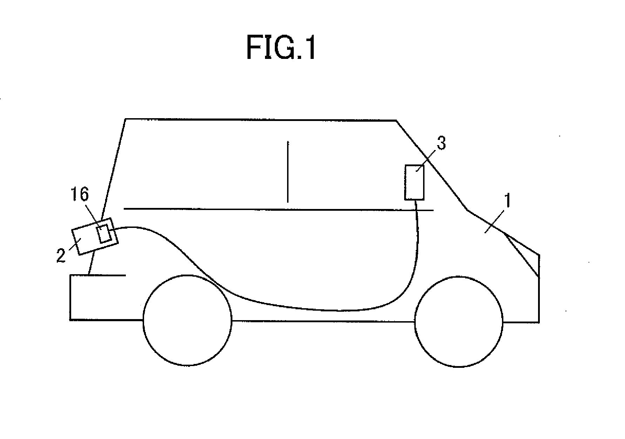

FIG. 1 is a configuration diagram of the first embodiment of the present invention.

In FIG. 1, the reference sign 1 indicates a vehicle mounting a drive assist display apparatus, the reference sign 2 indicates a vehicle-mounted camera for taking an image, the reference sign 16 indicates an image composition converting section for converting the image taken by the vehicle-mounted camera 2 into a composed conversion image, and the reference sign 3 indicates a monitor for displaying the composed conversion image. The image composition converting section 16 is operative to compose and convert the image, compose a mask picture, and draw guide lines. The guide lines represent the width of the vehicle and the distance. The image composition converting section 16 is built in the vehicle-mounted camera 2.

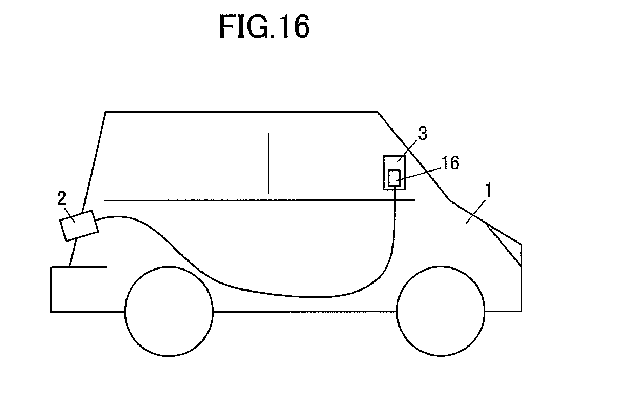

While the vehicle-mounted camera 2 is mounted on the rear side of the vehicle in FIG. 1, the vehicle-mounted camera 2 may be mounted on the front side of the vehicle. As shown in FIG. 15, the image composition converting device 15 may be operative to convert the image into the composed conversion image. As shown in FIG. 16, the image composition converting section 16 may be built in the monitor 3.

The image processing of the image composition converting section 16 will be specifically described hereinafter with reference to the image example under the state that the imaging situation is in the positional relationship shown in FIG. 2.

In FIG. 2, the reference sign 4a indicates an axis representing the center between the left and right sides of the vehicle, the reference sign 4b indicates a rear side of the vehicle such as an edge of a rear bumper of the vehicle, the reference signs 5a to 5d indicate lines each representing the distance from the center between the left and right sides of the vehicle, the reference signs 6a to 6e indicate lines each representing the distance from the rear side of the vehicle, the reference sign 7a indicates a stationary cube, and the reference sign 8 indicates the rear bumper of the vehicle.

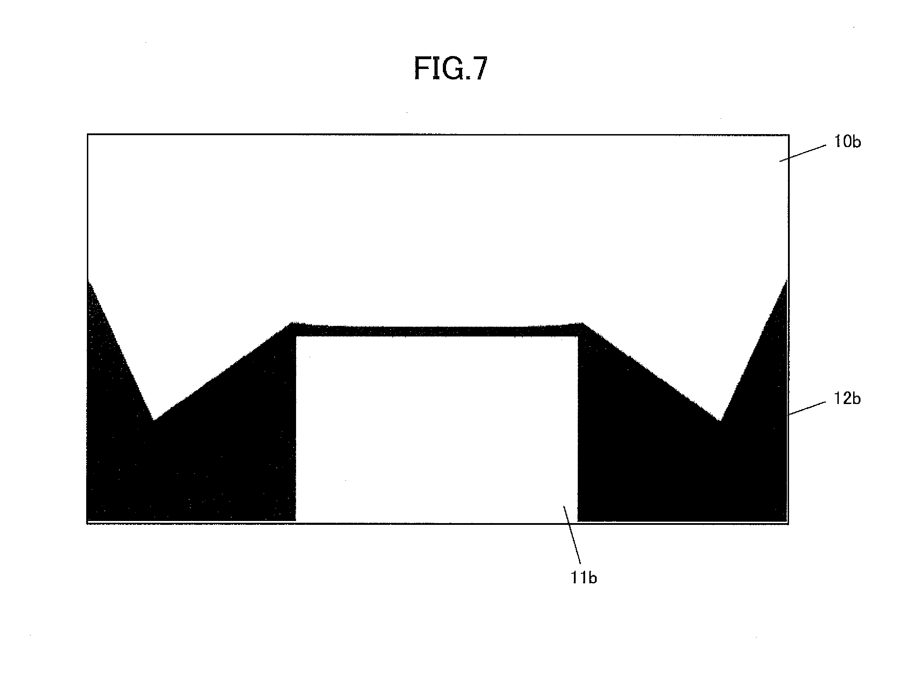

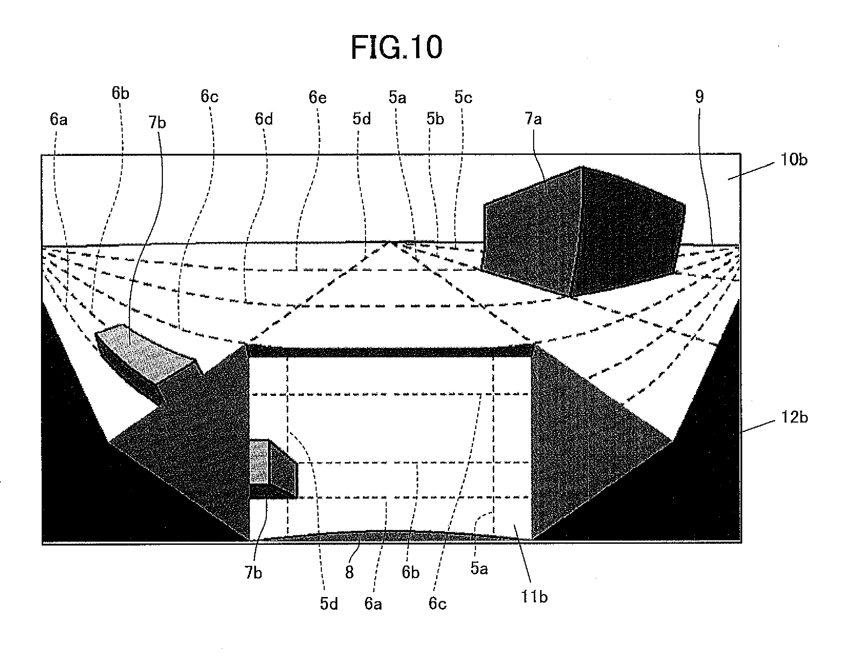

The composed conversion image according to the first embodiment of the present inventions will be shown in FIGS. 7 to 10.

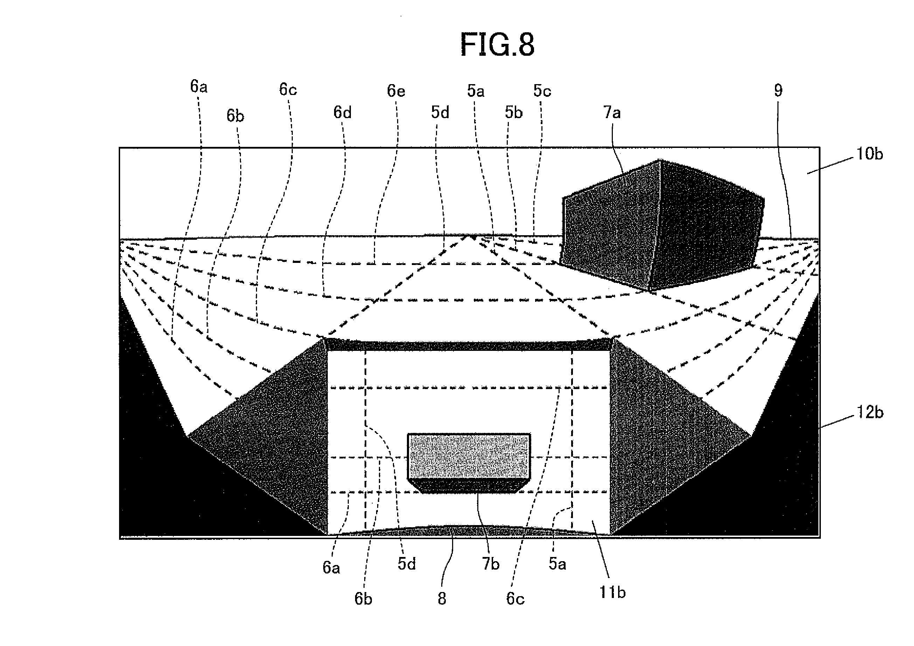

In FIG. 7, the reference sign 10b indicates an image view showing a wide area behind the vehicle, the reference sign 11b indicates an image view showing a square image converted from the image of the area behind the vehicle as if looked down from a virtual viewpoint, and the reference sign 12b indicates a mask picture view filling a space between the image views 10b and 11b. The mask picture 12b is shown in a plurality of colors as shown in FIGS. 8 to 10.

FIGS. 8 to 10 show the composed conversion images under the state that the imaging situation is in the positional relationship shown in FIG. 2.

In FIGS. 8 to 10, the reference sign 9 indicates a horizon, and the reference sign 7b indicates a sideways traveling cube having a height of 20cm, a width of 1m, and a depth of 25cm.

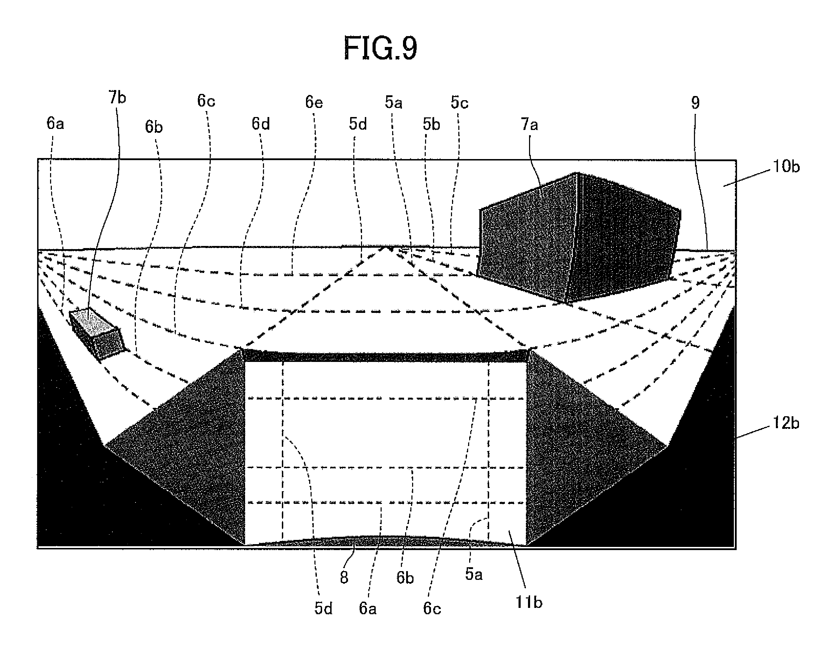

If the cube 7b travels from the left hand, the displayed images are in order as shown in FIGS. 9,10, and 8.

The image view 11b is converted from an image of an area having a base in the vicinity of the rear bumper of the vehicle 1, a depth of just over 1m behind the vehicle, and a width of just over 2m, as if looked down from the virtual viewpoint.

The image view 10b shows the wide area behind the vehicle with being clipped to make the image view 11b displayed. The image view 10b may be operated to correct for the influence of the deformation of a lens, and correct to improve viewable the wide area. Otherwise, the image view 10b may not be operated to correct as described above. In FIGS. 8 to 10, the image view 10b is operated to correct as described above.

The image view 11b is placed on the clipped part of the image view 10b.

The mask picture view 12b is drawn with pictures respectively connecting from the sides except the bottom side of the image view 11b to the corresponding sides of the clipped part of the image view 10b in different color corresponding to each side. The mask picture view 12b may be drawn with lines respectively connecting from the edges of the sides of the image view 11b to the corresponding edges of the sides of the clipped part of the image view 10b.

The side of the clipped part of the image view 10b may be completely fitted to the side of the image view 11b. Otherwise, the side of the clipped part of the image view 10b may be slightly overlapped to the side of the image view 11b. In FIGS. 8 to 10, the image views 10b and 11b integrally shows the area having a width of just over 2.2m and a depth of just over 1m.

In the composed conversion image each shown in FIGS. 8 to 10, the subject being in the wide area far away behind the vehicle is shown in the image view 10b. When the subject such as the cube 7b closes to behind the vehicle, the subject is shown with moving from the image view 10b to the image view 11b. The subject is shown with moving between the image views via the vicinity point of the sides of the image views. This leads to the fact that the line of sight can easily change between the image views

As will be seen from the foregoing description, it is to be understood that the image views has a high level of visibility, resulting from the fact that the positional relationship between the image views is similar to that of the actual view. Moreover, the driver is freed from comparing the two image views, resulting from the fact that the redundantly displayed region of the taken image is removed. This leads to the fact that the embodiment of the present invention can reduce the time for the driver to match the positional relationship between two image views. Furthermore, the embodiment of the present invention can widely display the first and second image views without the influence of the horizontal and vertical size of the other image view, resulting from the fact that the second view is placed on the clipped part of the first image view. In addition, the embodiment of the present invention can make the line of sight easily change between the first and second image views, resulting from the fact that the first and second views are related the position by the mask picture representing the positional relationship between the first and second image view.

### (Second Embodiment)

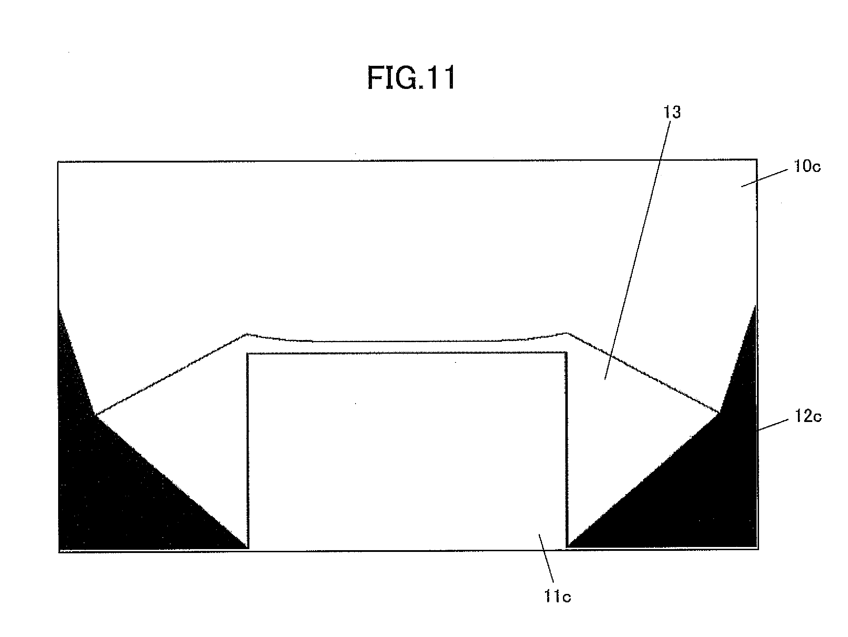

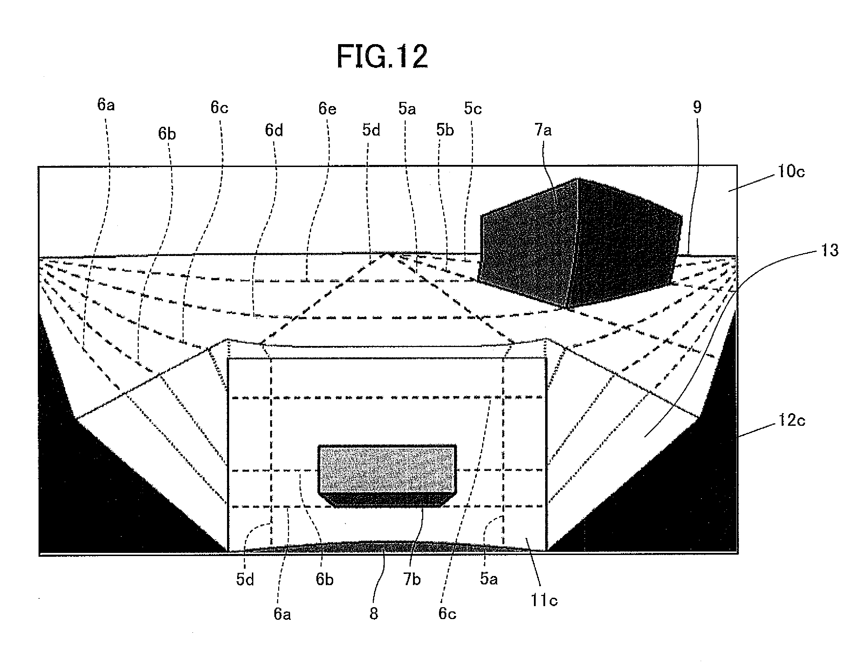

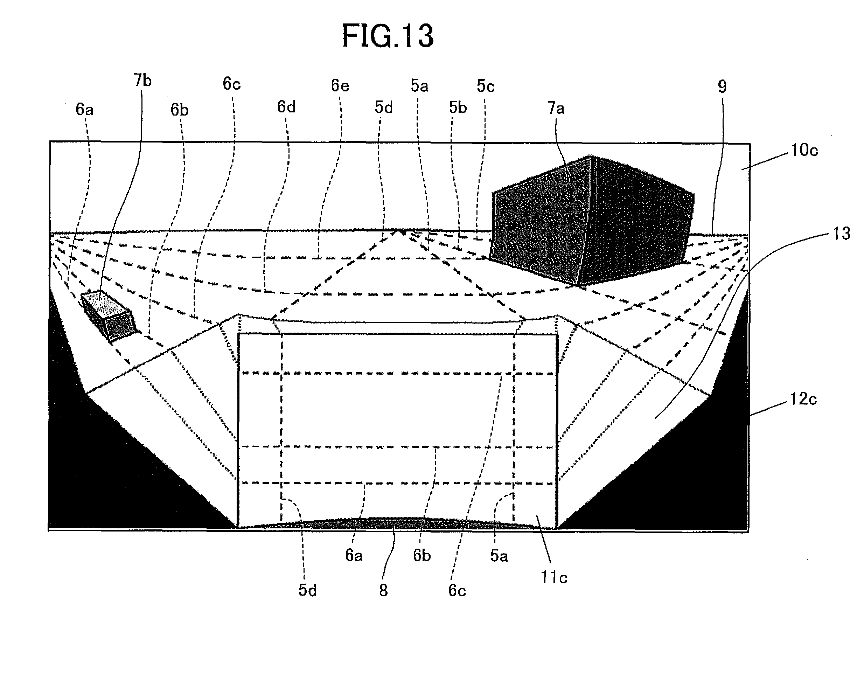

The composed conversion images according to the second embodiment of the present invention will be shown in FIGS. 11 to 14.

In FIG. 11, the reference sign 10c indicates an image view showing a wide area behind the vehicle, the reference sign 11c indicates an image view showing an image converted from the image of the area behind the vehicle as if looked down from a virtual viewpoint, and the reference sign 13 indicates an image view drawn with pictures respectively connecting from the sides except the bottom side of the image view 11c to the corresponding sides of the clipped part of the image view 10c to be appeared as continuous from each side of the image view 11c to each side of the clipped part of the image view 10c.

The reference sign 12c indicates a mask picture view filling a space among the image views 10c, 11c and 13. The boundaries among the image views 10c, 11c and 13 are drawn with lines to clear themselves among the image views.

It is preferred that the potion of the clipped part of the image view 10c be completely equal to the display position of the image view 11c.

In similar way to FIGS. 8 to 10, FIGS. 12 to 14 show the composed conversion images under the state that the imaging situation is in the positional relationship shown in FIG. 2.

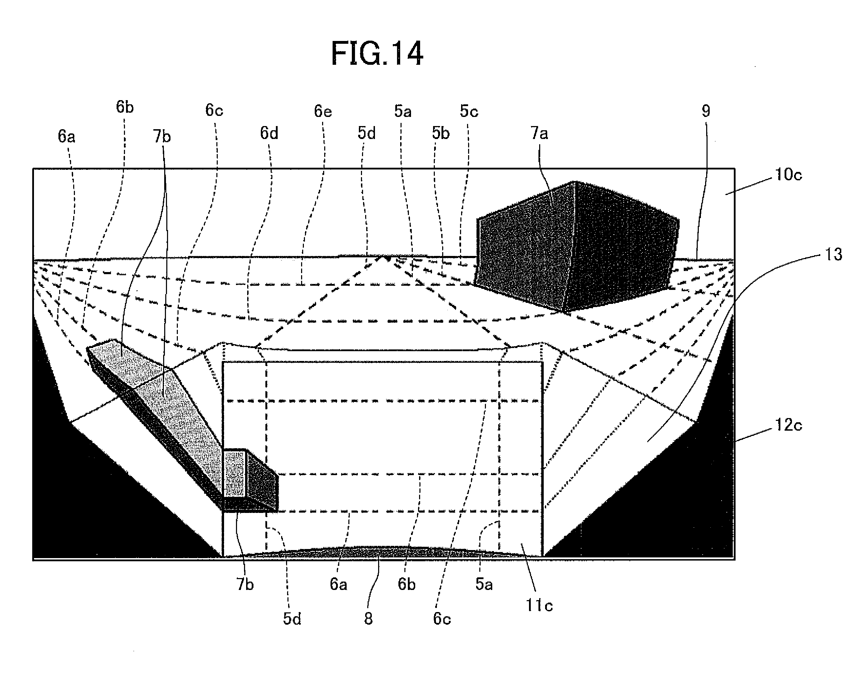

As specifically shown in FIG. 14, the cube 7b shown in the image view 10c and 11c is appeared as continuous by the image view 13.

As will be seen from the foregoing description, it is to be understood that the subject can be continuously displayed on the image views. This leads to the fact that the embodiment of the present invention can make the line of sight easily change between the image views.

### [Industrial Applicability]

The drive assist display apparatus of the present invention is available for a drive assist display apparatus which can remove a redundantly displayed region of the taken image, place the image views in the relationship similar to an actual view to make the line of sight easily change between the image views, and display the image views widely with suitable balance.

### [Reference Signs List]

- 1: vehicle
- 2: vehicle-mounted camera
- 3: monitor
- 4a: center between the left and right sides of the vehicle
- 4b: rear side of the vehicle
- 5a-5d: lines each representing the distance shown in FIG. 2 from the center between the left and right sides of the vehicle
- 6a-6e: lines each representing the distance shown in FIG. 2 from the rear side of the vehicle
- 7a, 7b: cube
- 8: rear bumper of the vehicle
- 9: horizon
- 10a-10c: image view
- 11a-11c: image view
- 12a-12c: mask picture view
- 13: image view
- 15: image composition converting device
- 15: image composition converting section

## Claims

1. A drive assist display apparatus for displaying a composed conversion image including a first image view showing a wide area of one of rear and front of a vehicle, a second image view showing a square image converted from a part of the first image view as if looked down from a virtual viewpoint, and a mask picture view filling a space between the first and second image views, wherein
the drive assist display apparatus is designed to clip a part of the first image view, and to place the second image view on a part of the clipped part of the first image view.

2. The drive assist display apparatus as set forth in claim 1,
drawing the mask picture view with pictures respectively connecting from the up, right and left sides of the second image view to the corresponding sides of the clipped part of the first image view in different color of the up side from the right and left sides of the second image view.

3. The drive assist display apparatus as set forth in claim 1,
drawing the mask picture view with pictures respectively connecting from the sides except the bottom side of the second image view to the corresponding sides of the clipped part of the first image view to be appeared as continuous from each side of the second image view to each side of the clipped part of the first image view.
